# EUROPÄISCHE PATENTSCHRIFT

(11) **EP 1 338 644 B1**
(45) Veröffentlichungstag und Bekanntmachung des Hinweises auf die Patenterteilung: **15.10.2008**
(21) Anmeldenummer: 03002939.1
(22) Anmeldetag: 11.02.2003
(51) Int. Cl.: C11D 1/90, C07C 233/10, C07C 233/36, C08L 5/00, C07D 261/00

(54) **Hochkonzentrierte wässrige Lösungen von Betainen**
Concentrated aqueous solutions of betains
Solutions aqueuses concentrées de bétaines

(30) Priorität: 23.02.2002 DE 10207924
(43) Veröffentlichungstag der Anmeldung: 27.08.2003
(73) Patentinhaber: Evonik Goldschmidt GmbH, 45127 Essen (DE)
(72) Erfinder: Keck, Helmut, 84508 Burgkirchen (DE); Weinelt, Frank, Dr., 84508 Burgkirchen (DE)
(74) Vertreter: Rotenberg, Klaus

(56) Entgegenhaltungen:
- EP-A- 0 353 580
- EP-A- 0 560 114
- EP-A- 0 739 878
- WO-A-97/07094
- DE-A- 4 408 228
- DE-A- 19 738 634
- DE-C- 19 505 196
- US-A- 5 583 258
- PATENT ABSTRACTS OF JAPAN vol. 1998, no. 10, 31. August 1998 (1998-08-31) & JP 10 130223 A (KAO CORP), 19. Mai 1998 (1998-05-19)

## Beschreibung

Die Erfindung betrifft hochkonzentrierte wässrige Lösungen von Betainen, mit einem Wirkstoffgehalt dieser Tenside von mindestens 30 Gew.-% bei einem pH-Wert von 2 bis 12, die in Gegenwart geringer Mengen eines wasserlöslichen Kohlenhydrats als viskose Flüssigkeiten vorliegen.

Es ist bekannt, dass amphotere Tenside, insbesondere Betaine, in Abhängigkeit von den zu ihrer Herstellung verwendeten Fettsäuren oberhalb von Tensidgehalten (WS) von 30 Gew.-% in Wasser lyotrope kristalline Phasen ausbilden. Diese Phasen sind von fester Konsistenz und verhalten sich wie Festkörper. Sie sind nicht mehr pumpbar und lassen sich für den Anwender schwer handhaben.

In EP-A-353 580 ist beschrieben, dass das Phasenverhalten von Tensiden durch Zugabe von Cotensiden, beispielsweise durch Zusatz von nichtionischen Tensiden, beeinflusst werden kann. Eine Senkung der Viskosität von wässrigen Tensidlösungen kann bekanntermaßen auch durch Lösemittel, beispielsweise n-Alkohole oder mehrwertige Alkohole erreicht werden. Beispielswiese sind in WO 99/24157 Lösungen von Betainen beschrieben, die genau definierte Mengen an Betain, Wasser und Ethanol enthalten.

In EP 560 114 werden wässrige, flüssige Lösungen eines Betains mit einem Festkörpergehalt von mindestens 40 Gew.-% beschrieben, gekennzeichnet durch einen Gehalt an 1 bis 3 Gew.-% einer oder mehrerer gesättigter oder ungesättigter Fettsäuren und 0 bis 4 Gew.-% Glycerin, bezogen auf die Lösung. Fettsäure und Glycerin werden vor oder während der Quaternierung des tertiären Amins mit Chloressigsäure dem Reaktionsgemisch zugegeben.
Zur Änderung des Phasenverhaltens von Tensiden mit Hilfe von Cotensiden sind allerdings größere Mengen notwendig. Durch Zugabe der lipophilen Zusätzen werden die Tensideigenschaften verändert, was für den Nutzer nachteilig sein kann.

Zudem sind unter Umständen Cotensid und Lösemittel in der Formulierung unerwünscht.

Die Aufgabe der Erfindung besteht darin, möglichst hochkonzentrierte, wässrige Lösungen von Betainen herzustellen, die pumpbar und leicht zu handhaben sind und keine Cotenside oder flüchtige oder öko-toxikologisch problematische, organische Lösungsmittel enthalten. Die Tensidlösungen sollen so hoch konzentriert sein, dass diese aufgrund des verringerten Wassergehaltes selbstkonservierend sind und lange Zeit lagerstabil bleiben ohne dass bakterielle Zersetzung eintritt.

Gegenstand der Erfindung sind hochkonzentrierte wässrige Lösungen von Betainen, die ein wasserlösliches Kohlenhydrat enthalten.

Als Betaine kommen insbesondere solche der folgenden Formel in Frage: 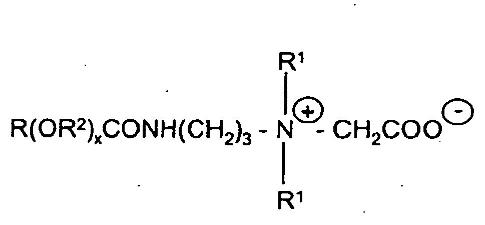 wobei R eine Alkyl-, Hydroxyalkyl- oder Alkylphenylgruppe mit 8 bis 22 Kohlenstoffatomen, jeder Rest R¹ unabhängig voneinander eine Alkyl- oder Hydroxyalkylgruppe mit 1 bis 3 Kohlenstoffatomen oder eine Polyethylenoxidgruppe mit 1 bis 3 Ethylenoxideinheiten bedeuten oder zwei R¹-Gruppen über eine ―O- oder ―NH-Gruppe unter Ringbildung miteinander verbunden sind, R² eine Alkylengruppe mit 2 bis 3 Kohlenstoffatomen oder Mischungen hiervon, und x eine Zahl von 0 bis 10 bedeuten.

Als wasserlösliche Kohlenhydrate werden erfindüngsgemäß hydrophile Cyclodextrine, auch Cycloglucane genannt, können bei dem Abbau von Stärke durch Bacillus macarans oder Bacillus circulans unter Einwirkung von Cyclodextringlycosyltransferase gebildet werden. Die Cyclodextrine bestehen im wesentlichen aus 6,7 oder 8 α-verknüpften Glucose-Einheiten. Erfindungsgemäß können alle Cyclodextrinmonomere, beispielsweise α-, β-, γ-Cyclodextrin eingesetzt werden. Ebenso eignen sich Cyclodextrinderivate wie beispielsweise Cyclodextrincarbonate, -ether, oder -polyether, oder Cyclodextrinderivate, bei denen eine oder mehrere Hydroxygruppen durch funktionelle Reste substituiert sind. Solche funktionellen Reste umfassen beispielsweise Methyl-. Ethyl-, Hydroxyethyl, Hydroxypropyl-, Acetyl- oder Aminogruppen. Auch beliebige Mischungen von Cyclodextrinen und/oder Cyclodextrinderivaten können eingesetzt werden.

Die erfindungsgemäßen flüssig-viskosen Tensidlösungen enthalten eines oder mehrere der oben beschriebenen wasserlöslichen Kohlenhydrate in Gewichtsmengen von 0,05 bis 2 Gew.-%, bevorzugt 0,1 bis 1 Gew.-%, besonders bevorzugt 0,2 bis 0,5 Gew.-%, bezogen auf die amphotere Tensidlösung. Die Konzentration an Tensid kann dabei auf Werte oberhalb 30 Gew.-% eingestellt werden.

Die Herstellung dieser hochkonzentrierten flüssigen Tensidlösungen kann nach zwei Methoden erfolgen.

Zu handelsüblichen wässrigen Tensidlösungen, beispielsweise einer wässrigen Lösung mit 30 Gew.-% Cocoamidopropyl-Betain (Genagen CAB) werden eines oder mehrere der oben genannten wasserlöslichen Kohlenhydrate bei Temperaturen oberhalb 60°C, bevorzugt bei 65°C bis 80°C zugemischt, das Gemisch 15 Minuten bis 30 Minuten gerührt und anschließend wird der Lösung unter Rühren bei 90°C bis 100°C, bevorzugt 95°C bis 98°C Wasser entzogen. Die Aufkonzentration der Lösung kann dadurch beschleunigt werden, dass ein Stickstoffstrom an der Oberfläche der Lösung Wasserdampf abführt.
Auf diese Weise können Tensidkonzentrate erhalten werden, die bei Raumtemperatur eine flüssig-viskose Konsistenz bei einem Tensidgehalt WS von 32 bis 38 Gew.-% haben.

Nach einer zweiten Methode können diese hochkonzentrierten Tensidlösungen erhalten werden, indem das wasserlösliche Kohlenhydrat bereits dem Reaktionsgemisch bei der Tensidsynthese zugesetzt wird. Die Synthese der Betaine und Aminoxide erfolgt in bekannter Weise. Eine Modifizierung der Synthesebedingungen ist dabei nicht notwendig.

Die erfindungsgemäßen Tensidlösungen erfüllen die Forderung, frei von Cotensiden und organischen Lösungsmitteln zu sein. Sie sind bereits bei einem Gehalt an Cyclodextrin von 0,1 bis 0,5 Gew.-% bei WS-Gehalten von bis zu 38 Gew.-% bzw. Feststoffgehalten bis zu 46 Gew.-% flüssig-viskos.

Die nachfolgenden Beispiele sollen die Erfindung näher erläutern ohne sie darauf einzuschränken:

### Beispiele

### Beispiel 1: Herstellung einer Cocoamidopropylbetainlösung mit einem Wirkstoffgehalt von 38 % in Gegenwart von β-Cyclodextrin (Cavamax W7)

206,5 g VE-Wasser, 2,13 g (0,5 % m/M bezogen auf Gesamteinwaage) β-Cyclodextrin (Fa. Wacker) und 131,6 g Cocos-Amidopropylamin (0,40 Mol) wurden in einem 1 I-Rührkolben vorgelegt und unter Rühren auf 75-80°C erwärmt. Dann wurden 36,54 ml Monochloressigsäure (80 %ig) (103,5 n/n bezogen auf Amidopropylamin) und 21,9 ml Natronlauge (50 %ig) (110 % n/n bezogen auf Amidopropylamin) im Zeitraum von
25 Minuten zugegeben und 15 Minuten bei 75 bis 80°C nachgerührt. Durch Zugabe von 1,1 ml NaOH (50 %ig) wurde der pH-Wert auf 8,0 bis 8,5 eingestellt, die Temperatur innerhalb einer Stunde auf 80 bis 85°C erhöht und 1 Stunde bei 80°C bis 85°C gerührt, anschließend innerhalb von
30 Minuten auf 85°C bis 90°C erhöht und 1 Stunde nachgerührt und schließlich innerhalb von 30 Minuten auf 90°C bis 95°C erhitzt und 5 Stunden bei 90°C bis 95°C nachgerührt.
Mit 4,0 g Zitronensäure (50 %ig) wurde der pH-Wert auf 5,0 bis 5,5 eingestellt.

### Beispiel 2: Herstellung einer Cocoamidopropylbetainlösung mit einem Wirkstoffgehalt von 37% in Gegenwart von β-Cyclodextrin (Cavamax W7)

221,1 g VE-Wasser, 0,88 g (0,2 % m/M bezogen auf Gesamteinwaage) β-Cyclodextrin (Fa. Wacker) und 131,6 g Cocos-Amidopropylamin (0,40 Mol) wurden in einem 1l-Rührkolben vorgelegt und unter Rühren auf 75-80°C erwärmt. Dann wurden 36,54 ml Monochloressigsäure (80 %ig) (103,5 n/n bezogen auf Amidopropylamin) und 21,9 ml Natronlauge (50 %ig) (110 % n/n bezogen auf Amidopropylamin) im Zeitraum von
15 Minuten zugegeben und 15 Minuten bei 75°C bis 80°C nachgerührt. Durch Zugabe von 1,1 ml NaOH (50 %ig) wurde der pH-Wert auf 8,0 bis 8,5 eingestellt, die Temperatur innerhalb einer Stunde auf 80 bis 85°C erhöht und 1 Stunde bei 80°C bis 85°C gerührt, anschließend innerhalb von 30 Minuten auf 85°C bis 90°C erhöht und 1 Stunde nachgerührt und schließlich innerhalb von 30 Minuten auf 90°C bis 95°C erhitzt und 5 Stunden bei 90°C bis 95°C nachgerührt.
Mit 4,0 g Zitronensäure (50 %ig) wurde der pH-Wert auf 5,0 bis 5,5 eingestellt.

### Beispiel 3: Herstellung einer Cocoamidopropylbetainlösung mit einem Wirkstoffgehalt von 37% in Gegenwart von β-Cyclodextrin (Cavasol W7HP)

221,1 g VE-Wasser, 2,13 g (0,5 % m/M bezogen auf Gesamteinwaage) Hydroxypropyl-β-Cyclodextrin (Fa. Wacker) und 131,6 g Cocos-Amidopropylamin (0,40 Mol) wurden in einem 1l-Rührkolben vorgelegt und unter Rühren auf 75-80°C erwärmt. Dann wurden 36,54 ml Monochloressigsäure (80 %ig) (103,5 n/n bezogen auf Amidopropylamin) und 21,9 ml Natronlauge (50 %ig) (110 % n/n bezogen auf Amidopropylamin) im Zeitraum von 15 Minuten zugegeben und 15 Minuten bei 75°C bis 80°C nachgerührt. Durch Zugabe von 1,1 ml NaOH (50 %ig) wurde der pH-Wert auf 8,0 bis 8,5 eingestellt, die Temperatur innerhalb einer Stunde auf 80 bis 85°C erhöht und 1 Stunde bei 80°C bis 85°C gerührt, anschließend innerhalb von 30 Minuten auf 85°C bis 90°C erhöht und 1 Stunde nachgerührt und schließlich innerhalb von 30 Minuten auf 90°C bis 95°C erhitzt und 5 Stunden bei 90°C bis 95°C nachgerührt.
Mit 4,0 g Zitronensäure (50 %ig) wurde der pH-Wert auf 5,0 bis 5,5 eingestellt.

### Beispiel 4: Herstellung einer Cocoamidopropylbetainlösung mit einem Wirkstoffgehalt von 37% in Gegenwart von γ-Cyclodextrin (Cavamax W8)

221,1 g VE-Wasser, 2,13 g (0,5 % m/M bezogen auf Gesamteinwaage) γ-Cyclodextrin (Fa. Wacker) und 131,6 g Cocos-Amidopropylamin (0,40 Mol) wurden in einem 1I-Rührkolben vorgelegt und unter Rühren auf 75-80°C erwärmt. Dann wurden 36,54 ml Monochloressigsäure (80 %ig) (103,5 n/n bezogen auf Amidopropylamin) und 21,9 ml Natronlauge (50 %ig) (110 % n/n bezogen auf Amidopropylamin) im Zeitraum von 15 Minuten zugegeben und 15 Minuten bei 75°C bis 80°C nachgerührt. Durch Zugabe von 1,1 ml NaOH (50 %ig) wurde der pH-Wert auf 8,0 bis 8,5 eingestellt, die Temperatur innerhalb einer Stunde auf 80 bis 85°C erhöht und 1 Stunde bei 80°C bis 85°C gerührt, anschließend innerhalb von 30 Minuten auf 85°C bis 90°C erhöht und 1 Stunde nachgerührt und schließlich innerhalb von 30 Minuten auf 90°C bis 95°C erhitzt und 5 Stunden bei 90°C bis 95°C nachgerührt.
Mit 4,0 g Zitronensäure (50 %ig) wurde der pH-Wert auf 5,0 bis 5,5 eingestellt.

### Beispiel 5: Aufkonzentration einer Cocoamidopropylbetainlösung durch Abstrippen von Wasser in Gegenwart von β-Cyclodextrin

200,0 g Cocoamidopropylbetainlösung (^{®}Genagen CAB 818) wurden unter Rühren bei Umgebungstemperatur mit 0,33 g β-Cyclodextrin (Cavamax W 7), entsprechend 0,2 Gew.-%. bezogen auf Endeinstellung, versetzt. Der Wirkstoffgehalt der Betainlösung betrug 29,8 Gew.-%.
Der Kobeninhalt wurde unter Rühren auf eine Sumpftemperatur von ca. 80°C erwärmt. Bei dieser Temperatur wurde 30 Minuten nachgerührt. Anschließend wurde der Kolbeninhalt unter Rühren auf ca. 98°C zum Abstrippen von Wasser erwärmt. Um das Abstrippen von Wasser zu beschleunigen, wurde ein leichter Stickstoffstrom über die Oberfläche der Betainlösung geführt.
War die berechnete Wassermenge abgestrippt, wurde der Kolbeninhalt unter Rühren auf ca. 40°C abgekühlt und abgefüllt.
Von einer Probe dieser aufkonzentrierten Cocoamidopropylbetainlösung wurde der Gehalt an Wasser und Kochsalz bestimmt.
Auf diese Weise erhielt man 163,7 g einer Cocoamidopropylbetainlösung (Endeinstellung) mit einem Wirkstofffgehalt von 36,4 Gew.-%, die bei Raumtemperatur eine flüssig-viskose Konsistenz hat.

## Patentansprüche

1. Hochkonzentrierte wässrige Lösungen von Betainen mit einem Wirkstoffgehalt von mindestens 30 Gew.-% bei einem ph-Wert von 2 bis 12, enthaltend ein wasserlösliches Kohlenhydrat, **dadurch gekennzeichnet, dass** sie als Betain eine Verbindung der allgemeinen Formel 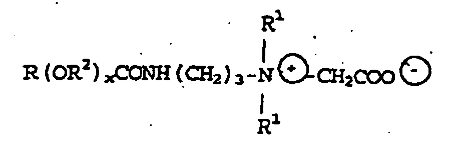 wobei R eine Alkyl-, Hydroxylalkyl- oder Alkylphenylgruppe mit 8 bis 22 Kohlenstoffatomen, jeder Rest R¹ unabhängig voneinander eine Alkylgruppe mit 1 bis 3 Kohlenstoffatomen, R² eine Alkylengruppe mit 2 bis 3 Kohlenstoffatomen oder Mischungen hiervon, und x eine Zahl von 0 bis 10 bedeuten, und als wasserlösliches Kohlenhydrat hydrophile Cyclodextrine enthalten.

2. Lösungen nach Anspruch 1, **dadurch gekennzeichnet, dass** sie 0,05 bis 1 Ges.-% der wasserlöslichen Cyclodextrine enthalten.

3. Verfahren zur Herstellung der Lösungen nach Anspruch 1, **dadurch gekennzeichnet, dass** man wässrigen Lösungen von Betainen während oder nach der Synthese ein Cyclodextrin zusetzt und anschließend die Lösung aufkonzentriert.

## Claims

1. Highly concentrated aqueous solutions of betaines with an active ingredient content of at least 30% by weight at a pH of from 2 to 12, comprising a water-soluble carbohydrate, **characterized in that** they comprise, as betaine, a compound of the general formula 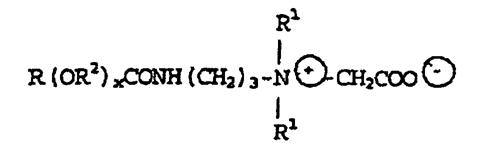 where R is an alkyl, hydroxyalkyl or alkylphenyl group having 8 to 22 carbon atoms, each radical R¹, independently of the others, is an alkyl group having 1 to 3 carbon atoms, R² is an alkylene group having 2 to 3 carbon atoms or mixtures thereof, and x is a number from 0 to 10, and, as water-soluble carbohydrate, hydrophilic cyclodextrins.

2. Solutions according to Claim 1, **characterized in that** they comprise 0.05 to 1% by weight of the water-soluble cyclodextrins.

3. Process for the preparation of the solutions according to Claim 1, **characterized in that** a cyclodextrin is added to aqueous solutions of betaines during or after the synthesis and then the solution is concentrated.

## Revendications

1. Solutions aqueuses hautement concentrées de bétaïnes présentant une teneur en ingrédient actif d'au moins 30 % en poids à un pH de 2 à 12, comprenant un hydrate de carbone hydrosoluble, **caractérisées en ce qu'**elles comprennent, en tant que bétaïne, un composé de formule générale : 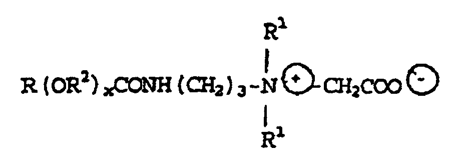 dans laquelle R représente un groupe alkyle, un groupe hydroxyalkyle ou un groupe alkylphényle renfermant de 8 à 22 atomes de carbone, chaque radical R¹ représente, indépendamment l'un de l'autre, un groupe alkyle renfermant de 1 à 3 atomes de carbone, R² représente un groupe alkylène renfermant de 2 à 3 atomes de carbone ou des mélanges de ceux-ci, et x représente un nombre de 0 à 10, et, en tant qu'hydrate de carbone hydrosoluble, des cyclodextrines hydrophiles.

2. Solutions selon la revendication 1, **caractérisées en ce qu'**elles comprennent de 0,05 à 1 % en poids des cyclodextrines hydrosolubles.

3. Procédé de préparation des solutions selon la revendication 1, **caractérisé en ce que** des solutions aqueuses de bétaïnes sont ajoutées durant ou après la synthèse d'une cyclodextrine et la solution est ensuite concentrée.
